(19) Europäisches Patentamt
European Patent Office
Office européen des brevets

(11) Veröffentlichungsnummer: **0 255 891 B1**

(12) **EUROPÄISCHE PATENTSCHRIFT**

(45) Veröffentlichungstag der Patentschrift: **06.03.91**

(51) Int. Cl.[5]: **C07F 9/58**, A01N 57/24

(21) Anmeldenummer: **87110467.5**

(22) Anmeldetag: **20.07.87**

(54) **Thionophosphonsäureester.**

(30) Priorität: **29.07.86 DE 3625585**

(43) Veröffentlichungstag der Anmeldung:
**17.02.88 Patentblatt 88/07**

(45) Bekanntmachung des Hinweises auf die Patenterteilung:
**06.03.91 Patentblatt 91/10**

(84) Benannte Vertragsstaaten:
**AT BE CH DE ES FR GB GR IT LI NL SE**

(56) Entgegenhaltungen:
**DE-A- 1 670 836**

(73) Patentinhaber: **BAYER AG**

**W-5090 Leverkusen 1 Bayerwerk(DE)**

(72) Erfinder: **Maurer, Fritz, Dr.**
**Roeberstrasse 8**
**W-5600 Wuppertal 1(DE)**
Erfinder: **Sommer, Herbert, Dr.**
**Platz 59**
**W-5630 Remscheid(DE)**
Erfinder: **Behrenz, Wolfgang, Dr.**
**Untergründemich 14**
**W-5068 Overath(DE)**
Erfinder: **Becker, Benedikt, Dr.**
**Metzkausener Strasse 14**
**W-4029 Mettmann(DE)**
Erfinder: **Homeyer, Bernhard, Dr.**
**Obere Strasse 28**
**W-5090 Leverkusen 3(DE)**

**EP 0 255 891 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue 0-Methyl-0-(3,5,6-trichlor-pyrid-2-yl)-thionophosphonsäureester, ein Verfahren zu ihrer Herstellung und ihre Verwendung in Schädlingsbekämpfungsmitteln, insbesondere als Insektizide, vorzugsweise bei der Bekämpfung von resistenten Dipteren-Arten.

Es ist bekannt, daß bestimmte 0-Ethyl-0-(3,5,6-trichlor-pyrid-2-yl)-thionophosphonsäureester, wie z. B. 0-Ethyl-0-(3,5,6-trichlor-pyrid-2-yl)-ethylthionophosphonsäureester, -methylthionophosphonsäureester und -phenylthionophosphonsäureester insektizide Eigenschaften aufweisen (vergl. z. B. DE-OS 16 70 836).

Es wurden nun neue 0-Methyl-0-(3,5,6-trichlor-pyrid-2-yl)-thionophosphonsäureester der Formel (I) gefunden,

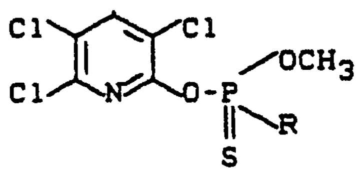

(I)

in welcher

R für Methyl oder Ethyl steht.

Weiterhin wurde gefunden, daß man die neuen 0-Methyl-0-(3,5,6-trichlor-pyrid-2-yl)-thionophosphonsäureester der Formel (I) erhält, wenn man 2-Hydroxy-3,5,6-trichlor-pyridin der Formel (II)

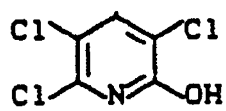

(II)

oder die entsprechenden Alkalimetall-, Erdalkalimetall-oder Ammoniumsalze mit Halogeniden der Formel (III)

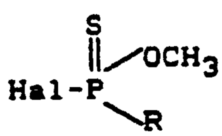

(III)

in welcher

R die oben angegebenen Bedeutungen hat und

Hal für Halogen steht,

gegebenenfalls in Gegenwart eines Säureakzeptors, gegebenenfalls in Gegenwart eines bicylischen organischen Amins und gegebenenfalls in Gegenwart eines Verdünnungsmittels umsetzt.

Die 0-Methyl-0-(3,4,6-trichlor-pyrid-2-yl)-thionophosphonsäureester der Formel (I) zeichnen sich in überragender Weise auch durch eine hohe Wirksamkeit bei der Bekämpfung von resistenten Dipteren aus.

Verwendet man beispielsweise für das erfindungsgemäße Verfahren 0-Methyl-methylthionophosphonsäureesterchlorid und 2-Hydroxy-3,5,6-trichlorpyridin als Ausgangsstoffe, so kann die entsprechende Reaktion durch das folgende Formelschema skizziert werden:

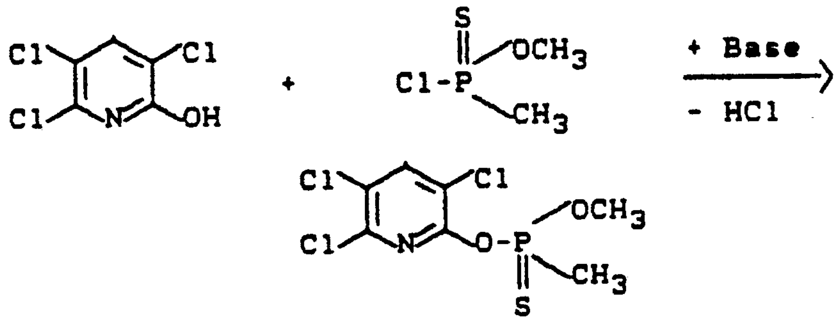


Das beim erfindungsgemäßen Verfahren als Ausgangstoff für die Herstellung der neuen Verbindungen der Formel (I) einzusetzende 2-Hydroxy-3,5,6-trichlorpyridin bzw. die entsprechenden Alkalimetall-, Erdalkalimetall- oder Ammoniumsalze sind durch die Formel (II) definiert. Als Alkalimetall-, Erdalkalimetall- oder Ammoniumsalze werden vorzugsweise die Natrium-, Kalium-, Calcium- oder Ammoniumsalze eingesetzt.

2-Hydroxy-3,5,6-trichlorpyridin und die entsprechenden Alkalimetall-, Erdalkalimetall- oder Ammoniumsalze sind bekannt und/oder können nach allgemein bekannten Verfahren und Methoden hergestellt werden (vergl. z. B. US-PS 3 244 586 US-PS 4 115 557).

Als Beispiele für die Verbindungen der Formel (II) seien genannt:

2-Hydroxy-3,5,6-trichlorpyridin und die entsprechenden Natrium-, Kalium-, Calcium- und Ammoniumsalze.

Die beim erfindungsgemäßen Verfahren außerdem als Ausgangsstoffe zu verwendenden Halogenide sind durch die Formel (III) allgemein definiert. In dieser Formel (III) steht R für Methyl oder Ethyl und Hal für Halogen, vorzugsweise für Chlor oder Brom.

Die Verbindungen der Formel (III) sind bekannt.

Als Beispiele für die Halogenide der Formel (III) seien genannt:

0-Methyl-methylthionophosphonsäureester- und 0-Methylethylthionophosphonsäureesterchlorid bzw. -bromid.

Das erfindungsgemäße Verfahren zur Herstellung der neuen 0-Methyl-0-(3,5,6-trichlor-pyrid-2-yl)-thionophosphonsäureester der Formel (I) wird vorzugsweise unter Verwendung von Verdünnungsmitteln durchgeführt. Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton und Nitrile wie z. B. Acetonitril und Propionitril.

Als Säureakzeptoren können alle üblichen Säurebindemittel Verwendung finden. Besonders bewährt haben sich Alkalicarbonate und -alkoholate wie Natrium- und Kaliumcarbonat, Kalium-tert.-butylat, ferner aliphatische, aromatische oder heterocyclische Amine, beispielsweise Triethylamin, Trimethylamin, Dimethylanilin, Dimethylbenzylamin und Pyridin. Falls die Verbindung der allgemeinen Formel (II) als Salz eingesetzt wird, ist die Zugabe des Säureakzeptors entbehrlich.

Das erfindungsgemäße Verfahren kann in Gegenwart eines bicyclischen organischen Amins, wie Chinuclidin und 1,4-Diazabicyclo-(2,2,2)-octan (DABCO), vorzugsweise DABCO als Katalysator durchgeführt werden. Das bicyclische organische Amin kann zugleich auch als Säureakzeptor verwendet werden. In diesem Falle werden wenigstens molare Mengen des bicyclischen organischen Amins, insbesondere von DABCO eingesetzt.

In einer bevorzugten Ausführungsform werden als Säureakzeptoren Alkalicarbonate insbesondere Natriumcarbonat und/oder Kaliumcarbonat und als Katalysator katalytische Mengen DABCO eingesetzt.

Das erfindungsgemäße Verfahren wird im allgemeinen bei Temperaturen zwischen 0 °C und 120 °C durchgeführt. Bevorzugt ist der Temperaturbereich zwischen 20 °C und 100 °C. Die Umsetzungen werden im allgemeinen bei Normaldruck durchgeführt.

Zur Durchführung des erfindungsgemäßen Verfahrens werden auf 1 Mol der Verbindung der Formel (II) oder des Salzes 1,0 bis 1,3 Mol, vorzugsweise zwischen 1,0 und 1,2 Mol Halogenid der Formel (III) und im Falle der Verwendung eines bicyclischen Amins als Katalysator 0,01 bis 0,08 Mol, vorzugsweise zwischen 0,02 bis 0,06 Mol bicyclisches organisches Amin (vorzugsweise DABCO) eingesetzt. Die Umsetzung wird im allgemeinen in einem Verdünnungsmittel sowie in Gegenwart eines Säureakzeptors durchgeführt. Der

Säureakzeptor wird in Mengen zugefügt, welche geeignet sind, den entsprechenden Halogenwasserstoff zu binden. Vorzugsweise werden je Mol Verbindung der Formel (II) 0,8 bis 2,5, insbesondere 0,9 bis 1,8 Mol Säureakzeptor eingesetzt. Nach Ablauf der Reaktion wird filtriert und das Lösungsmittel im Vakuum abdestilliert.

Die Verbindungen der Formel (I) fallen in Form von Ölen an, die sich zum Teil nicht unzersetzt destillieren lassen, jedoch durch sogenanntes "Andestillieren", d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich zur Bekämpfung von tierischen Schädlingen, vorzugsweise Arthropoden, insbesondere Insekten, die in der Landwirtschaft, in Forsten, im Vorrats-und Materialschutz sowie auf dem Hygienesektor vorkommen. Sie werden bevorzugt auf dem Haushalt- und Hygienesektor eingesetzt. Sie sind gegen normal sensible und resistente Arten sowie gegen alle oder einzelne Entwicklungsstadien wirksam. Zu den oben erwähnten Schadlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectionophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptionotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die erfindungsgemäßen Wirkstoffe zeichnen sich durch eine hervorragende insektizide Wirksamkeit aus, insbesondere bei der Bekämpfung von resistenten Dipteren, wie z. B. Musca domestica. Sie zeigen weiterhin eine gute Wirkung gegen Blattläuse wie z. B. Myzus persicae und gegen pflanzenschädigenden Milben, wie Tetranychus urticae und können auch bei der Bekämpfung von Bodeninsekten wie z. B. Phorbia antiqua-Maden eingesetzt werden. Ganz besonders bevorzugt werden die erfindungsgemäßen Verbindungen der Formel (I) jedoch eingesetzt auf dem Haushalt- und Hygienesektor auch bei der Bekämpfung der (gegenüber den üblichen Schädlingsbekämpfungsmitteln, insbesondere gegenüber den üblichen Phosphorsäureestern) resistenten Dipteren-Arten, vorzugsweise Musca domestica oder Aedes spp., insbesondere Musca domestica.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synhetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten ge meint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage; z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsporzent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die Wirkstoffe können ferner in ihren handelsüblichen Formulierungen sowie in den aus diesen Formulierungen bereiteten Anwendungsformen in Mischung mit Synergisten vorliegen. Synergisten sind

Verbindungen, durch die die Wirkung der Wirkstoffe gesteigert wird, ohne daß der zugesetzte Synergist selbst aktiv wirksam sein muß.

Der Wirkstoffgahalt der aus den handelsüblichen Formulierungen bereiteten Anwendungsformen kann in weiten Bereichen variieren. Die Wirkstoffkonzentration der Anwendungsformen kann von 0,00001 bis zu 95 Gew.-% Wirkstoff, vorzugsweise zwischen 0,001 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die biologische Wirksamkeit der erfindungsgemäßen Verbindungen soll anhand der folgenden Beispiele erläutert werden.

Herstellungsbeispiele

Beispiel 1

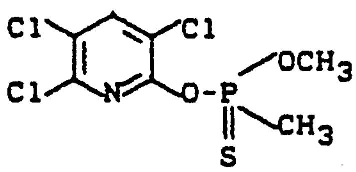

Eine Mischung aus 5 g (0,025 Mol) 2-Hydroxy-3,5,6-trichlorpyridin, 5,2 g (0,038 Mol) Kaliumcarbonat, 3,6 g (0,025 Mol) 0-Methyl-methylthionophosphonsäureesterchlorid und 80 ml Acetonitril wird 2 Stunden bei 20 °C gerührt. Dann wird mit 400 ml Toluol versetzt und zweimal mit je 200 ml Wasser geschüttelt. Die organische Phase wird abgetrennt, über Natriumsulfat getrocknet und im Vakuum eingedampft.

Man erhält 4,8 g (63 % der Theorie) 0-Methyl-0-(3,5,6-trichlor-2-pyridyl)-methylthionophosphonsäureester in Form farbloser Kristalle mit dem Schmelzpunkt 66 °C.

Beispiel 2

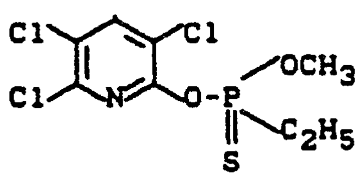

Eine Mischung aus 15 g (0,075 Mol) 2-Hydroxy-3,5,6-trichlorpyridin, 15,5 g (0,11 Mol) Kaliumcarbonat, 0,5 g 1,4-Diazabicyclo-(2,2,2)-octan, 11,8 g (0,075 Mol) O-Methylethylthionophosphonsäureesterchlorid und 150 ml Toluol wird 3 Stunden bei 50 °C gerüht. Dann wird auf 20 °C abgekühlt, vom anorganischen Salz abgesaugt und das Filtrat im Vakuum eingeengt. Der Rückstand wird bei 60 °C im Hochvakuum andestilliert.

Man erhält so 22 g (92 % der Theorie) O-Methyl-O-(3,5,6-trichlor-pyrid-2-yl)-ethylthionophosphonsäureester als gelbes
Öl vom Brechungsindex $n_D^{22}$ : 1,5500.

Verwendungsbeispiele

Im nachfolgenden Verwendungsbeispiel werden die nachstehend angegebenen Verbindungen als

Vergleichsverbindungen eingesetzt:

(A)

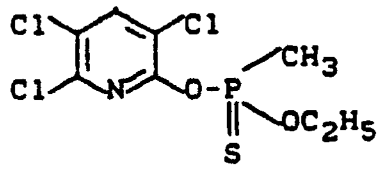

(B)

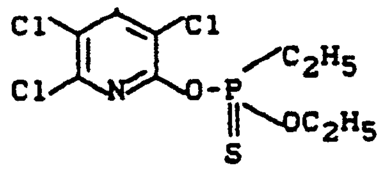

(C)

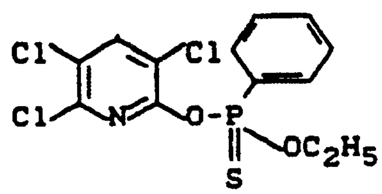

aus DE-OS 16 70 836

Beispiel A

$LT_{100}$-Test für Dipteren

Testtiere: Musca domestica (resistent)

Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man etwa 25 Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Bei diesem Test zeigten z. B. die Verbindungen der Herstellungsbeispiele (1) und (2) eine 100 %ige Wirkung bei einer beispielhaften Wirkstoffkonzentration von 0,002 % nach 75 und 120 Minuten, während die Vergleichsverbindungen (A) und(B) eine 100 %ige Wirkung bei der gleichen Konzentration erst nach 4 Stunden zeigten. Die Vergleichsverbindung (C) zeigte bei einer Wirkstoffkonzentration von 0,2% selbst nach 4 Stunden nach keine Wirkung (0%).

## Ansprüche

**1.** 0-Methyl-0-(3,5,6-trichlor-pyrid-2-yl)-thionophosphonsäureester der Formel (I),

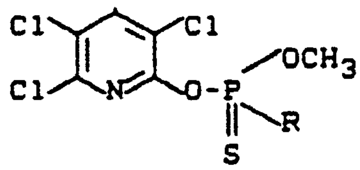

(I)

in welcher
R für Methyl oder Ethyl steht.

**2.** Thionophosphonsäureester nach Anspruch 1 der Formel

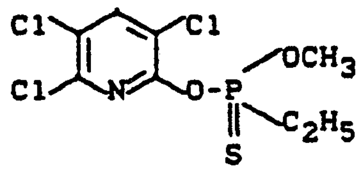

**3.** Thionophosphonsäureester nach Anspruch 1 der Formel

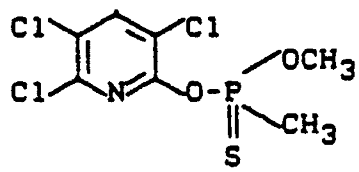

**4.** Verfahren zur Herstellung der 0-Methyl-0-(3,5,6-trichlor-pyrid-2-yl)-thionophosphonsäureester der Formel (I),

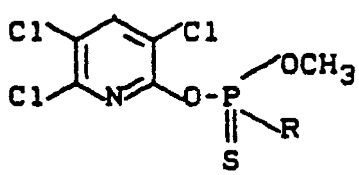

(I)

in welcher
R für Methyl oder Ethyl steht,
dadurch gekennzeichnet, daß man 2-Hydroxy-3,5,6-trichlorpyridin der Formel (II)

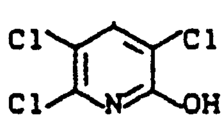

(II)

oder die entsprechenden Alkalimetall-, Erdalkalimetall-oder Ammoniumsalze mit Halogeniden der Formel (III)

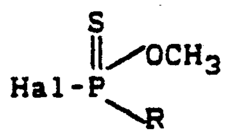

(III)

in welcher

R die oben angegebenen Bedeutungen hat und

Hal für Halogen steht,

gegebenenfalls in Gegenwart eines Säureakzeptors, gegebenenfalls in Gegenwart eines bicylischen organischen Amins und gegebenenfalls in Gegenwart eines Verdünnungsmittels umsetzt.

5. Schädlingsbekämpfungsmittel, gekennzeichnet, durch einen Gehalt an mindestens einer Verbindung der Formel (I) gemäß Anspruch 1 oder 4.

6. Verwendung von Verbindungen der Formel (I) gemäß Anspruch 1 oder 4 zur Bekämpfung von Schädlingen, vorzugsweise Arthropoden, insbesondere Insekten.

7. Verwendung von Verbindungen der Formel (I) gemäß Anspruch 1 oder 4 zur Bekämpfung von Dipteren, insbesondere gegenüber üblichen Schädlingsbekämpfungsmitteln resistente Dipteren.

8. Verfahren zur Bekämpfung von Schädlingen, dadurch gekennzeichnet, daß man Verbindungen der Formel (I) gemäß Anspruch 1 oder 4 auf Schädlinge, vorzugsweise Arthropoden, insbesondere Insekten oder ihren Lebensraum einwirken läßt.

9. Verfahren zur Bekämpfung von Dipteren, insbesondere gegenüber üblichen Schädlingsbekämpfungsmitteln resistente Dipteren, dadurch gekennzeichnet, daß Verbindungen der allgemeinen Formel (I) gemäß Anspruch 1 oder 4 auf diese Dipteren oder ihren Lebensraum einwirken läßt.

10. Verfahren zur Herstellung von Schädlingsbekämpfungsmitteln, dadurch gekennzeichnet, daß man Verbindungen der Formel (I) gemäß Anspruch 1 oder 4 mit Streckteln und/oder oberflächenaktiven Mitteln vermischt.

## Claims

1. 0-Methyl 0-(3,5,6-trichloro-pyrid-2-yl) thionophosphonates of the formula (I),

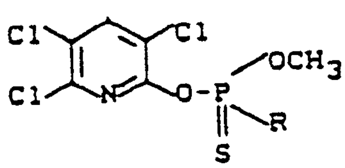

(I)

in which

R represents methyl or ethyl.

2. Thionophosphonate according to Claim 1 of the formula

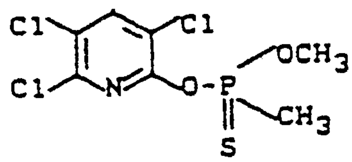

3. Thionophosphonate according to Claim 1 of the formula

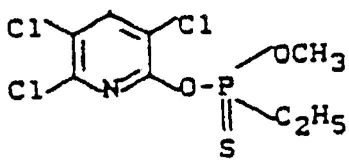

4. Process for the preparation of the 0-methyl 0-(3,5,6-trichloro-pyrid-2-yl) thionophosphonates of the formula (I),

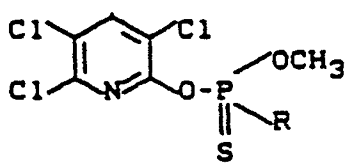

(I)

in which

R represents methyl or ethyl, characterized in that 2-hydroxy-3,5,6-trichloropyridine of the formula (II)

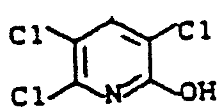

(II)

or the corresponding alkali metal, alkaline earth metal or ammonium salts, is reacted with halides of the formula (III)

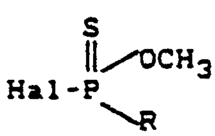

(III)

in which

R has the abovementioned meanings, and
Hal represents halogen,
if appropriate in the presence of an acid acceptor, if appropriate in the presence of a bicyclic organic amine and if appropriate in the presence of a diluent.

5. Pesticides, characterized in that they contain at least one compound of the formula (I) according to Claim 1 or 4.

6. Use of compounds of the formula (I) according to Claim 1 or 4 for combating pests, preferably arthropods, particularly insects.

7. Use of compounds of the formula (I) according to Claim 1 or 4 for combating Diptera, particularly Diptera which are resistant to conventional pesticides.

8. Process for combating pests, characterized in that compounds of the formula (I) according to Claim 1 or 4 are allowed to act on pests, preferably arthropods, particularly insects, or on their habitat.

9. Process for combating Diptera, particularly Diptera which are resistant to conventional pesticides, characterized in that compounds of the general formula (I) according to Claim 1 or 4 are allowed to act on these Diptera or on their habitat.

10. Process for the preparation of pesticides, characterized in that compounds of the formula (I) according to Claim 1 or 4 are mixed with extenders and/or surface-active agents.

**Revendications**

1. Ester de 0-méthyle et de 0-(3,5,6-trichloro-pyrid-2-yle) d'acide thionophosphonigue de formule (I)

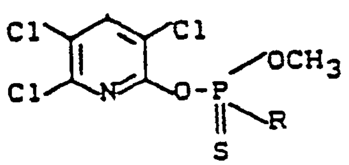

(I)

dans laquelle

R est un groupe méthyle ou éthyle.

2. Ester d'acide thionophosphonique suivant la revendication 1, de formule

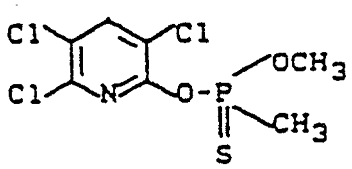

3. Ester d'acide thionophosphonique suivant la revendication 1, de formule

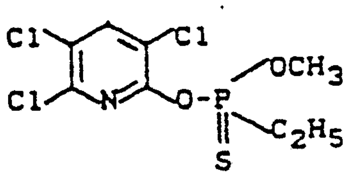

4. Procede de préparation des esters de O-méthyle et de 0-(3,5,6-trichloro-pyrid-2-yle) d'acide thionophosphonique de formule (I),

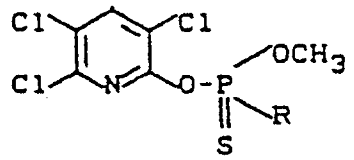

(I)

dans laquelle

R est un groupe méthyle ou éthyle,

caractérisé en ce qu'on fait réagir la 2-hydroxy-3,5,6-trichloropyridine de formule (II)

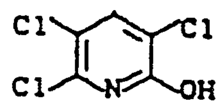

(II)

ou les sels correspondants de métaux alcalins, de métaux alcalino-terreux ou d'ammonium avec des halogénures de formule (III)

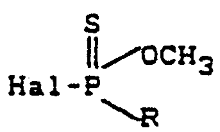

(III)

dans laquelle

R a les définitions indiquées ci-dessus et

Hal représente un halogène,

le cas échéant en présence d'un accepteur d'acide, éventuellement en présence d'une amine organique bicyclique et le cas échéant en présence d'un diluant.

**5.** Compositions pesticides, caractérisées par une teneur en au moins un composé de formule (I) suivant la revendication 1 ou 4.

**6.** Utilisation de composés de formule (I) suivant la revendication 1 ou 4 pour combattre des parasites, de préférence des arthropodes, notamment des insectes.

**7.** Utilisation de composés de formule (I) suivant la revendication 1 ou la revendication 4 pour combattre des diptères, notamment des diptères résistant aux pesticides classiques.

**8.** Procédé pour combattre des parasites, caractérisé en ce qu'on fait agir des composés de formule (I) suivant la revendication 1 ou 4 sur des parasites, de préférence des arthropodes, notamment des insectes, ou sur leur milieu.

**9.** Procédé pour combattre des diptères, notamment des diptères résistant aux pesticides classiques, caractérisé en ce qu'on fait agir des composés de formule générale (I) suivant la revendication 1 ou 4 sur ces diptères ou sur leur milieu.

**10.** Procédé de préparation de compositions pesticides, caractérisé en ce qu'on mélange des composés de formule (I) suivant la revendication 1 ou 4 avec des diluants et/ou des agents tensio-actifs.